# EUROPEAN PATENT SPECIFICATION

(11) **EP 4 471 297 B1**
(45) Date of publication and mention of the grant of the patent: **25.03.2026**
(21) Application number: 24178610.2
(22) Date of filing: 28.05.2024
(51) Int. Cl.: F16H 61/00, F15B 11/16, F15B 11/17

(54) **HYDRAULIC FLOW SUMMATION VALVE CONTROL SYSTEM**
HYDRAULISCHES DURCHFLUSSSUMMIERUNGS-VENTILSTEUERSYSTEM
SYSTÈME DE COMMANDE DE SOUPAPE À SOMMATION DE FLUX HYDRAULIQUE

(30) Priority: 31.05.2023 IT 202300011121
(43) Date of publication of application: 04.12.2024
(73) Proprietor: CNH Industrial Italia S.p.A., 10156 Torino (IT)
(72) Inventor: NONIS, Andrea, 10156 Turin (IT); BENEVELLI, Alessandro, 10156 Turin (IT); GARG, Ankur, 110017 New Delhi (IN); KARAMBALKAR, Vijay, 110017 New Delhi (IN)
(74) Representative: CNH Industrial IP Department

(56) References cited:
- DE-A1- 102020 127 127
- DE-A1- 19 603 899
- US-A1- 2008 034 746
- US-A1- 2014 129 035
- US-A1- 2017 274 930
- US-A1- 2019 323 525
- US-A1- 2022 186 753
- US-B2- 6 810 663

## Description

### FIELD OF THE INVENTION

The present invention relates generally to a vehicle (e.g. a tractor, a truck, etc.). More specifically, the present invention relates to a vehicle with a hydraulic system.

### BACKGROUND

The hydraulic system facilitates the operation of hydraulic subsystems (e.g. a steering subsystem, a transmission subsystem, an auxiliary subsystem, etc.) of the vehicle as shown for example in patent application DE 10 2020 127127 A.

However, there is constant need to improve existing hydraulic system for the aforementioned hydraulic subsystems of a vehicle.

### SUMMARY OF THE INVENTION

The aforementioned aim is reached by a vehicle comprising a hydraulic system as claimed in the appended set of claims.

### DETAILED DESCRIPTION OF DRAWINGS

For a better understanding of the present invention, a preferred embodiment is described in the following, by way of a non-limiting example, with reference to the attached drawings wherein:
- Figure 1 is a perspective view of a vehicle, according to an exemplary embodiment.
- Figure 2 is a schematic block diagram of the vehicle of FIG. 1, according to an exemplary embodiment.
- Figure 3 is a schematic block diagram of a driveline of the vehicle of FIG. 1, according to an exemplary embodiment.
- Figure 4 is a schematic block diagram of a hydraulic system of the vehicle of FIG. 1 with a feedback line, according to an exemplary embodiment.
- Figure 5 is a schematic block diagram of a hydraulic system of the vehicle of FIG. 1 with a pair of the feedback lines, according to an exemplary embodiment.

### DETAILED DESCRIPTION

According to an exemplary embodiment, a vehicle of the present invention includes a chassis, a driveline coupled to the chassis, and a hydraulic system (e.g., a hydraulic system coupled to the driveline, etc.) and configured to facilitate the operation of the hydraulic system (e.g., the driveline, etc.). The hydraulic system includes a first hydraulic outlet, a second hydraulic outlet, a third hydraulic outlet, a first pump configured to produce a first flow rate of a hydraulic fluid, a second pump configured to produce a second flow rate of the hydraulic fluid, a priority valve, and a summation valve. The priority valve includes a priority inlet fluidly coupled to the first pump, a primary outlet fluidly coupled to the first hydraulic outlet, and a secondary outlet fluidly coupled to the second hydraulic outlet. The summation valve includes a summation inlet fluidly coupled to the second pump, a return outlet fluidly coupled to the priority inlet of the priority valve, an auxiliary outlet fluidly coupled to the third hydraulic outlet, and a first control input coupled to the secondary outlet of the priority valve.

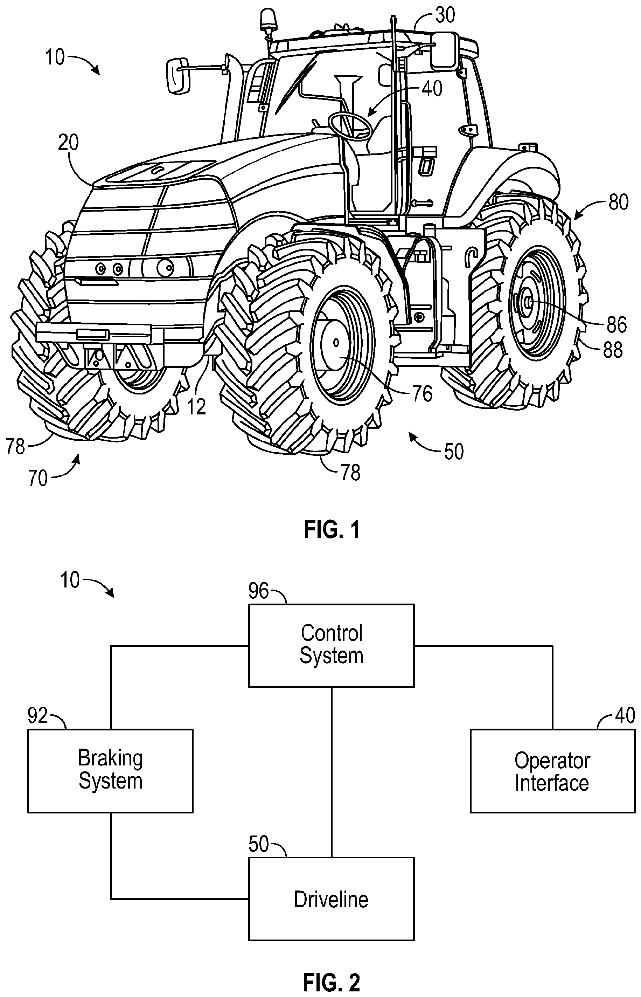

According to the exemplary embodiment shown in FIGS. 1-3, a machine or vehicle (e.g., a non-articulated vehicle, an articulated vehicle, etc.), shown as vehicle 10, includes a chassis, shown as frame 12; a body assembly, shown as body 20, coupled to the frame 12 and having an occupant portion or section, shown as cab 30; operator input and output devices, shown as operator interface 40, that are disposed within the cab 30; a drivetrain, shown as driveline 50, coupled to the frame 12 and at least partially disposed under the body 20; a vehicle braking system, shown as braking system 92, coupled to one or more components of the driveline 50 to facilitate selectively braking the one or more components of the driveline 50; and a vehicle control system, shown as control system 96, coupled to the operator interface 40, the driveline 50, and the braking system 92. In other embodiments, the vehicle 10 includes more or fewer components.

The chassis of the vehicle 10 may include a structural frame (e.g., the frame 12) formed from one or more frame members coupled to one another (e.g., as a weldment). Additionally or alternatively, the chassis may include a portion of the driveline 50. By way of example, a component of the driveline 50 (e.g., the transmission 56) may include a housing of sufficient thickness to provide the component with strength to support other components of the vehicle 10.

According to an exemplary embodiment, the vehicle 10 is an off-road machine or vehicle. In some embodiments, the off-road machine or vehicle is an agricultural machine or vehicle such as a tractor, a telehandler, a front loader, a combine harvester, a grape harvester, a forage harvester, a sprayer vehicle, a speedrower, and/or another type of agricultural machine or vehicle. In some embodiments, the off-road machine or vehicle is a construction machine or vehicle such as a skid steer loader, an excavator, a backhoe loader, a wheel loader, a bulldozer, a telehandler, a motor grader, and/or another type of construction machine or vehicle. In some embodiments, the vehicle 10 includes one or more attached implements and/or trailed implements such as a front mounted mower, a rear mounted mower, a trailed mower, a tedder, a rake, a baler, a plough, a cultivator, a rotavator, a tiller, a harvester, and/or another type of attached implement or trailed implement.

According to an exemplary embodiment, the cab 30 is configured to provide seating for an operator (e.g., a driver, etc.) of the vehicle 10. In some embodiments, the cab 30 is configured to provide seating for one or more passengers of the vehicle 10. According to an exemplary embodiment, the operator interface 40 is configured to provide an operator with the ability to control one or more functions of and/or provide commands to the vehicle 10 and the components thereof (e.g., turn on, turn off, drive, turn, brake, engage various operating modes, raise/lower an implement, etc.). The operator interface 40 may include one or more displays and one or more input devices. The one or more displays may be or include a touchscreen, a LCD display, a LED display, a speedometer, gauges, warning lights, etc. The one or more input device may be or include a steering wheel, a joystick, buttons, switches, knobs, levers, an accelerator pedal, a brake pedal, etc.

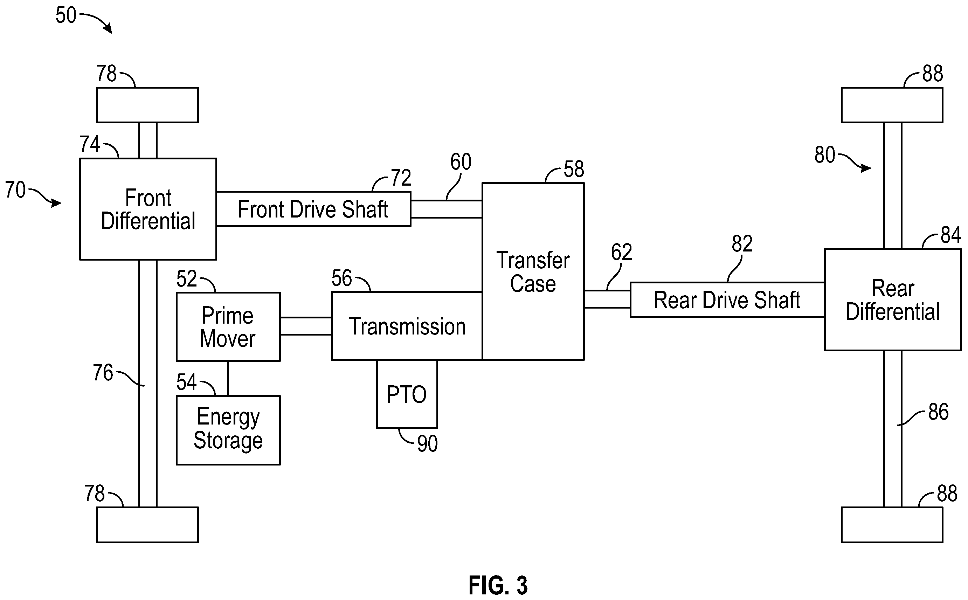

According to an exemplary embodiment, the driveline 50 is configured to propel the vehicle 10. As shown in FIG. 3, the driveline 50 includes a primary driver, shown as prime mover 52, and an energy storage device, shown as energy storage 54. In some embodiments, the driveline 50 is a conventional driveline whereby the prime mover 52 is an internal combustion engine and the energy storage 54 is a fuel tank. The internal combustion engine may be a spark-ignition internal combustion engine or a compression-ignition internal combustion engine that may use any suitable fuel type (e.g., diesel, ethanol, gasoline, natural gas, propane, etc.). In some embodiments, the driveline 50 is an electric driveline whereby the prime mover 52 is an electric motor and the energy storage 54 is a battery system. In some embodiments, the driveline 50 is a fuel cell electric driveline whereby the prime mover 52 is an electric motor and the energy storage 54 is a fuel cell (e.g., that stores hydrogen, that produces electricity from the hydrogen, etc.). In some embodiments, the driveline 50 is a hybrid driveline whereby (i) the prime mover 52 includes an internal combustion engine and an electric motor/generator and (ii) the energy storage 54 includes a fuel tank and/or a battery system.

As shown in FIG. 3, the driveline 50 includes a transmission device (e.g., a gearbox, a continuous variable transmission ("CVT"), etc.), shown as transmission 56, coupled to the prime mover 52; a power divider, shown as transfer case 58, coupled to the transmission 56; a first tractive assembly, shown as front tractive assembly 70, coupled to a first output of the transfer case 58, shown as front output 60; and a second tractive assembly, shown as rear tractive assembly 80, coupled to a second output of the transfer case 58, shown as rear output 62. According to an exemplary embodiment, the transmission 56 has a variety of configurations (e.g., gear ratios, etc.) and provides different output speeds relative to a mechanical input received thereby from the prime mover 52. In some embodiments (e.g., in electric driveline configurations, in hybrid driveline configurations, etc.), the driveline 50 does not include the transmission 56. In such embodiments, the prime mover 52 may be directly coupled to the transfer case 58. According to an exemplary embodiment, the transfer case 58 is configured to facilitate driving both the front tractive assembly 70 and the rear tractive assembly 80 with the prime mover 52 to facilitate front and rear drive (e.g., an all-wheel-drive vehicle, a four-wheel-drive vehicle, etc.). In some embodiments, the transfer case 58 facilitates selectively engaging rear drive only, front drive only, and both front and rear drive simultaneously. In some embodiments, the transmission 56 and/or the transfer case 58 facilitate selectively disengaging the front tractive assembly 70 and the rear tractive assembly 80 from the prime mover 52 (e.g., to permit free movement of the front tractive assembly 70 and the rear tractive assembly 80 in a neutral mode of operation). In some embodiments, the driveline 50 does not include the transfer case 58. In such embodiments, the prime mover 52 or the transmission 56 may directly drive the front tractive assembly 70 (i.e., a front-wheel-drive vehicle) or the rear tractive assembly 80 (i.e., a rear-wheel-drive vehicle).

As shown in FIGS. 1 and 3, the front tractive assembly 70 includes a first drive shaft, shown as front drive shaft 72, coupled to the front output 60 of the transfer case 58; a first differential, shown as front differential 74, coupled to the front drive shaft 72; a first axle, shown front axle 76, coupled to the front differential 74; and a first pair of tractive elements, shown as front tractive elements 78, coupled to the front axle 76. In some embodiments, the front tractive assembly 70 includes a plurality of front axles 76. In some embodiments, the front tractive assembly 70 does not include the front drive shaft 72 or the front differential 74 (e.g., a rear-wheel-drive vehicle). In some embodiments, the front drive shaft 72 is directly coupled to the transmission 56 (e.g., in a front-wheel-drive vehicle, in embodiments where the driveline 50 does not include the transfer case 58, etc.) or the prime mover 52 (e.g., in a front-wheel-drive vehicle, in embodiments where the driveline 50 does not include the transfer case 58 or the transmission 56, etc.). The front axle 76 may include one or more components.

As shown in FIGS. 1 and 3, the rear tractive assembly 80 includes a second drive shaft, shown as rear drive shaft 82, coupled to the rear output 62 of the transfer case 58; a second differential, shown as rear differential 84, coupled to the rear drive shaft 82; a second axle, shown rear axle 86, coupled to the rear differential 84; and a second pair of tractive elements, shown as rear tractive elements 88, coupled to the rear axle 86. In some embodiments, the rear tractive assembly 80 includes a plurality of rear axles 86. In some embodiments, the rear tractive assembly 80 does not include the rear drive shaft 82 or the rear differential 84 (e.g., a front-wheel-drive vehicle). In some embodiments, the rear drive shaft 82 is directly coupled to the transmission 56 (e.g., in a rear-wheel-drive vehicle, in embodiments where the driveline 50 does not include the transfer case 58, etc.) or the prime mover 52 (e.g., in a rear-wheel-drive vehicle, in embodiments where the driveline 50 does not include the transfer case 58 or the transmission 56, etc.). The rear axle 86 may include one or more components. According to the exemplary embodiment shown in FIG. 1, the front tractive elements 78 and the rear tractive elements 88 are structured as wheels. In other embodiments, the front tractive elements 78 and the rear tractive elements 88 are otherwise structured (e.g., tracks, etc.). In some embodiments, the front tractive elements 78 and the rear tractive elements 88 are both steerable. In other embodiments, only one of the front tractive elements 78 or the rear tractive elements 88 is steerable. In still other embodiments, both the front tractive elements 78 and the rear tractive elements 88 are fixed and not steerable.

In some embodiments, the driveline 50 includes a plurality of prime movers 52. By way of example, the driveline 50 may include a first prime mover 52 that drives the front tractive assembly 70 and a second prime mover 52 that drives the rear tractive assembly 80. By way of another example, the driveline 50 may include a first prime mover 52 that drives a first one of the front tractive elements 78, a second prime mover 52 that drives a second one of the front tractive elements 78, a third prime mover 52 that drives a first one of the rear tractive elements 88, and/or a fourth prime mover 52 that drives a second one of the rear tractive elements 88. By way of still another example, the driveline 50 may include a first prime mover that drives the front tractive assembly 70, a second prime mover 52 that drives a first one of the rear tractive elements 88, and a third prime mover 52 that drives a second one of the rear tractive elements 88. By way of yet another example, the driveline 50 may include a first prime mover that drives the rear tractive assembly 80, a second prime mover 52 that drives a first one of the front tractive elements 78, and a third prime mover 52 that drives a second one of the front tractive elements 78. In such embodiments, the driveline 50 may not include the transmission 56 or the transfer case 58.

As shown in FIG. 3, the driveline 50 includes a power-take-off ("PTO"), shown as PTO 90. While the PTO 90 is shown as being an output of the transmission 56, in other embodiments the PTO 90 may be an output of the prime mover 52, the transmission 56, and/or the transfer case 58. According to an exemplary embodiment, the PTO 90 is configured to facilitate driving an attached implement and/or a trailed implement of the vehicle 10. In some embodiments, the driveline 50 includes a PTO clutch positioned to selectively decouple the driveline 50 from the attached implement and/or the trailed implement of the vehicle 10 (e.g., so that the attached implement and/or the trailed implement is only operated when desired, etc.).

According to an exemplary embodiment, the braking system 92 includes one or more brakes (e.g., disc brakes, drum brakes, inboard brakes, axle brakes, etc.) positioned to facilitate selectively braking (i) one or more components of the driveline 50 and/or (ii) one or more components of a trailed implement. In some embodiments, the one or more brakes include (i) one or more front brakes positioned to facilitate braking one or more components of the front tractive assembly 70 and (ii) one or more rear brakes positioned to facilitate braking one or more components of the rear tractive assembly 80. In some embodiments, the one or more brakes include only the one or more front brakes. In some embodiments, the one or more brakes include only the one or more rear brakes. In some embodiments, the one or more front brakes include two front brakes, one positioned to facilitate braking each of the front tractive elements 78. In some embodiments, the one or more front brakes include at least one front brake positioned to facilitate braking the front axle 76. In some embodiments, the one or more rear brakes include two rear brakes, one positioned to facilitate braking each of the rear tractive elements 88. In some embodiments, the one or more rear brakes include at least one rear brake positioned to facilitate braking the rear axle 86. Accordingly, the braking system 92 may include one or more brakes to facilitate braking the front axle 76, the front tractive elements 78, the rear axle 86, and/or the rear tractive elements 88. In some embodiments, the one or more brakes additionally include one or more trailer brakes of a trailed implement attached to the vehicle 10. The trailer brakes are positioned to facilitate selectively braking one or more axles and/or one more tractive elements (e.g., wheels, etc.) of the trailed implement.

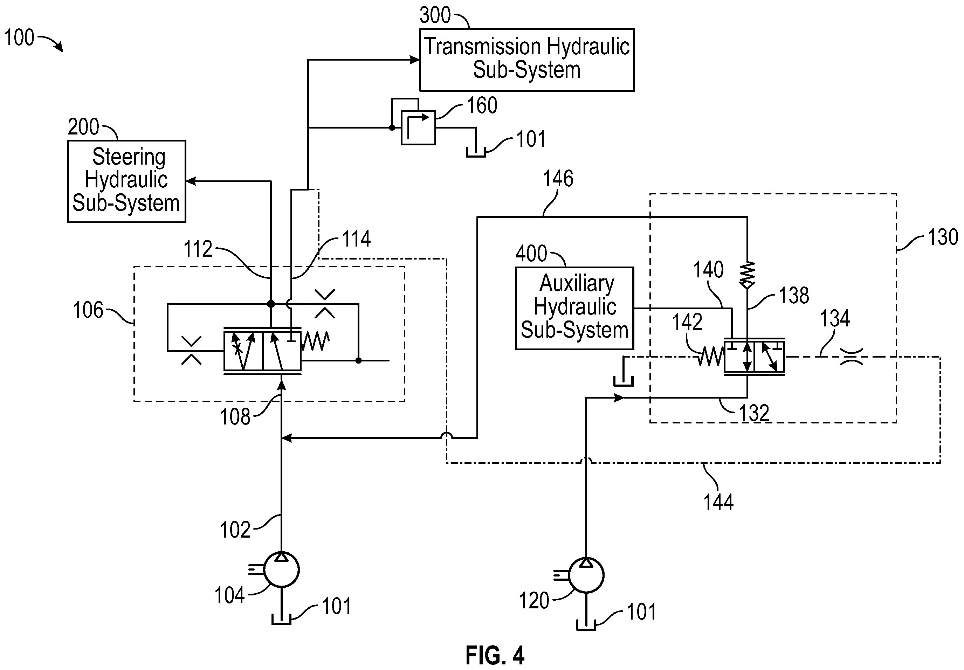

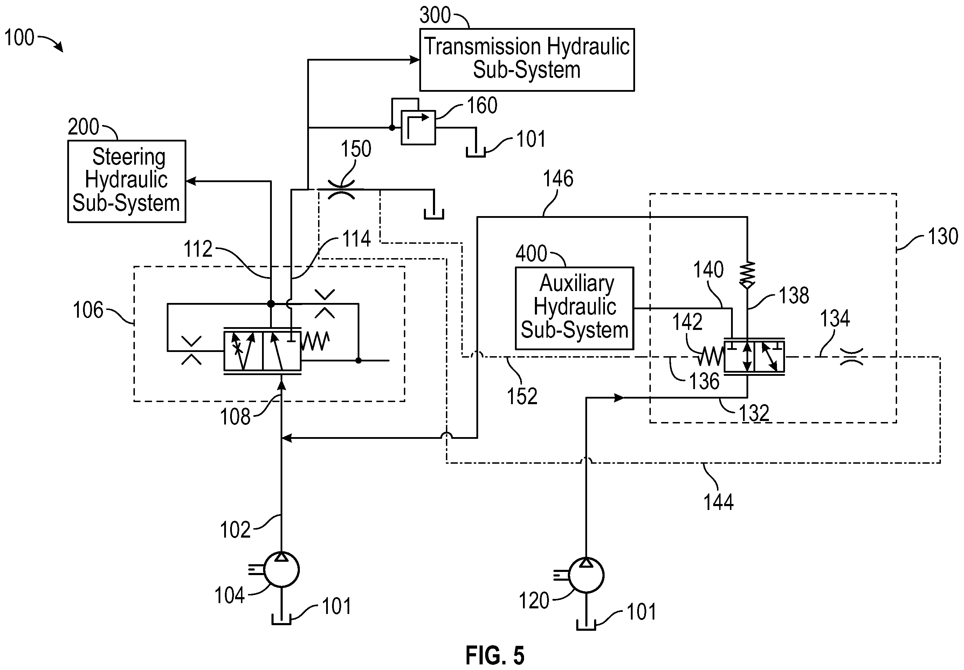

According to the exemplary embodiment shown in FIGS. 4 and 5, the vehicle 10 includes a hydraulic system, shown as hydraulic system 100. The hydraulic system 100 includes a first hydraulic outlet (e.g., a first hydraulic subsystem, etc.), shown as steering hydraulic subsystem 200, configured to steer (e.g., turn, direct, etc.) the front tractive element 78, a second hydraulic outlet (e.g., a second hydraulic subsystem, etc.) shown as transmission hydraulic subsystem 300, configured to alternate the configuration of the transmission 56, and a third hydraulic outlet (e.g., a third hydraulic subsystem, etc.), shown as auxiliary hydraulic subsystem 400, configured to operate an auxiliary subsystem (e.g., a lift system, a manipulator system, etc.) of the vehicle 10. In some embodiments, the hydraulic system 100 may include additional hydraulic subsystems (e.g., a fourth hydraulic subsystem, a fifth hydraulic subsystem, etc.). According to an exemplary embodiment, the steering hydraulic subsystem 200 has a first required maintaining flow rate that must be provided to the steering hydraulic subsystem 200 for the steering hydraulic subsystem 200 to be able to steer the front tractive element 78. According to an exemplary embodiment, the transmission hydraulic subsystem 300 has a second required maintaining pressure that must be provided to the transmission hydraulic subsystem 300 for the transmission hydraulic subsystem 300 to be able to optimally alternate the configuration of the transmission. In various embodiments, the steering hydraulic system is configured to steer the front tractive elements 78 and/or the rear tractive assembly 80. In other embodiments, the first hydraulic subsystem, the second hydraulic subsystem, and the third hydraulic subsystem are configured to manipulate other components (e.g. a lifter, a manipulator, etc.) of the vehicle 10.

As shown in FIGS. 4 and 5, the hydraulic system 100 includes: a reservoir, shown as hydraulic reservoir 101, configured to store convey a hydraulic fluid (e.g., an oil, a water glycol solution, etc.); a series of lines (e.g., pipes, tubes, etc.), shown as hydraulic lines 102, configured to convey the hydraulic fluid through the hydraulic system 100; a priority valve (e.g., load-sensing priority valve, 3-way control valve, etc.), shown as priority valve 106, configured to direct the hydraulic fluid to the steering hydraulic subsystem 200 and the transmission hydraulic subsystem 300; a flow summation valve (e.g. metering valve, variable displacement valve, a 3-way control valve, etc.), shown as summation valve 130, configured to direct the hydraulic fluid to the priority valve and the auxiliary hydraulic subsystem 400; a first pump, shown as primary pump 104, fluidly coupled to the hydraulic reservoir 101 and configured to produce a first flow of the hydraulic fluid; a second pump, shown as auxiliary pump 120, fluidly coupled to the hydraulic reservoir 101 and configured to produce a second flow of the hydraulic fluid; and a relief valve, shown as relief valve 160, fluidly coupled to the secondary outlet 114, fluidly coupled to the hydraulic reservoir 101, positioned parallel to the transmission hydraulic subsystem 300, and configured to allow a flow from the secondary outlet 114 to the hydraulic reservoir 101 when a first pressure of the relief valve is greater than a relief valve preset pressure. In some embodiments, the relief valve preset pressure is equal to the second required maintaining pressure. In other embodiments, the relief valve preset pressure is less than the second required maintaining pressure. In still other embodiments, the relief valve preset pressure is greater than the second required maintaining pressure.

According to an exemplary embodiment, the primary pump 104 and the auxiliary pump 120 are coupled to PTO 90 such that the primary pump 104 and the auxiliary pump 120 are driven by the PTO 90 at operating speeds relative to the operating speed of the prime mover 52. In some embodiments, the primary pump 104 and the auxiliary pump 120 are each driven by an electric motor coupled to energy storage system 54 and controlled by the control system 96. In some embodiments, the primary pump 104 and the auxiliary pump 120 are driven by an electric motor coupled to energy storage system 54 and controlled by the control system 96.

As shown in FIGS. 4 and 5, the priority valve 106 includes a first inlet (e.g. an intake, etc.) shown as priority inlet 108, fluidly coupled to the primary pump 104, a first outlet (e.g. an outtake, etc.), shown as primary outlet 112, fluidly coupled to the steering hydraulic subsystem 200, and a second outlet, shown as secondary outlet 114, fluidly coupled to the transmission hydraulic subsystem 300. The priority valve 106 is configured to receive an inlet flow of the hydraulic fluid at the priority inlet 108, direct a primary flow representative of the first required maintaining pressure (e.g. a minimum operating flow, etc.) to the primary outlet 112 such that the steering hydraulic subsystem 200 receives the first required maintaining flow rate of the hydraulic fluid necessary to steer the vehicle 10, and then direct an excess flow (e.g. a remaining flow, etc.) of the hydraulic fluid, defined as a difference between the inlet flow and the primary flow, to the secondary outlet 114, such that the transmission hydraulic subsystem 300 receives the excess flow.

According to the exemplary embodiment shown in FIG. 4, the summation valve 130 includes: a second inlet, shown as summation inlet 132, fluidly coupled to the auxiliary pump 120; a third outlet, shown as return outlet 138; a fourth outlet, shown as auxiliary outlet 140, fluidly coupled to the auxiliary hydraulic subsystem 400; a first control input, shown as primary control input 134, fluidly coupled to the secondary outlet 114 of the priority valve 106; and a spring (e.g., a compression element, etc.), shown as spring 142, with a preset spring force coupled to the primary control input 134. The spring is configured to direct (e.g., meter, guide, etc.) a return flow through the return outlet 138 of the summation valve 130 and direct an auxiliary flow through the auxiliary outlet defined as the difference between the second flow from the auxiliary pump and the return flow through the return outlet 138. According to an exemplary embodiment, the preset spring force is adjustable (e.g, adaptable, modifiable, etc.). In other embodiments, the spring 142 was selected to have a specific preset spring force based on other attributes of the hydraulic system 100 (e.g., equal to a force created by a pressure, etc.). The spring 142 is configured to increase a portion the second flow from the auxiliary pump 120 directed through the return outlet 138 when an external force applied to the spring in a direction opposite the preset spring force is less than the preset spring force and the spring is also configured to decrease the portion of the second flow from the auxiliary pump 120 directed through the return outlet 138 when an external force applied to the spring in the direction opposite the preset spring force is greater than the preset spring force.

According to the exemplary embodiment shown in FIG. 4, the primary control input 134 applies a first control input force on the spring 142 in the direction opposite the preset spring force representative of a second pressure of the excess flow through the secondary outlet 114. As a result of the first control input force, the spring 142 will increase the return flow through the return outlet 138 and decrease the auxiliary flow through the auxiliary outlet 140 when the first control input force is less than the preset spring force. Additionally, the spring 142 will decrease the return flow through the return outlet 138 and increase the auxiliary flow through the auxiliary outlet 140 when the first control input force is greater than the preset spring force. According to the exemplary embodiment shown in FIG. 4, the preset spring force is configured to be equal to the first control force when the second pressure of the excess flow is equal to the second required maintaining pressure. In other embodiments the preset spring force is configured to be less than the first control force when the second pressure of the excess flow is equal to the second required maintaining pressure. In still other embodiments the preset spring force is configured to be greater than the first control force when the second pressure of the excess flow is equal to the second required maintaining pressure. The result is that the inlet flow through the priority inlet 108 is at least sufficient to generate the first required maintaining flow rate for the steering hydraulic subsystem 200 and the second required maintaining pressure and flow for the transmission hydraulic subsystem 300.

According to the exemplary embodiment shown in FIG. 4, the hydraulic system 100 includes a first feedback line, shown as feedback line 144, fluidly coupled between the secondary outlet 114 of the priority valve 106 and the primary control input 134 of the summation valve 130 and a return line, shown as return line 146, fluidly coupled between the return outlet 138 of the summation valve 130 and the priority inlet 108 of the priority valve 106.

According to the exemplary embodiment shown in FIG. 5, the hydraulic system 100 further includes an orifice, shown as orifice 150, fluidly coupled to the secondary outlet 114 of the priority valve 106 and positioned in parallel with the transmission hydraulic subsystem 300. In some embodiments, the orifice 150 has an aperture with a predetermined size to allow for a pressure of the hydraulic fluid in front of the orifice 150 to be higher than a pressure of the hydraulic fluid behind the orifice 150.

According to the exemplary embodiment shown in FIG. 5, the summation valve 130 further includes: a second control input, shown as secondary control input 136, fluidly coupled to the orifice and coupled to the spring 142. According to the exemplary embodiment shown in FIG. 5, the secondary control input 136 applies a second control input force on the spring 142 representative of an orifice pressure of the orifice flow through the orifice 150 in an same direction of the preset spring force of the spring 142.

According to the exemplary embodiment shown in FIG. 5, the spring 142 is configured to increase the return flow through the return outlet 138 and decrease the auxiliary flow through the auxiliary outlet 140 when a difference between the first control input force and the second control input force is less than the preset spring force. The spring 142 is further configured to decrease the return flow through the return outlet 138 and increase the auxiliary flow through the auxiliary outlet 140 when the difference between the first control input force and the second control input force is greater than the preset spring force. The result is that the inlet flow through the priority inlet 108 will approach a quantity sufficient to generate the first required maintaining flow rate for the steering hydraulic subsystem 200 and the second required maintaining pressure and flow for the transmission hydraulic subsystem 300.

According to the exemplary embodiment shown in FIG. 5, the spring 142 modifying the return flow through the return outlet 138 based on the difference between the first control input force and the second control input force relative to the preset spring force will advantageously dampens the response of the summation valve 130 to changes in the excess flow of hydraulic fluid exiting the secondary outlet 114. The response of the summation valve 130 in situations when the first pressure of the excess flow exiting the secondary outlet 114 spikes or decreases rapidly before returning to the previous level will not increase or decrease the return flow through the return outlet 138 to the level that would occur without the secondary control input 136.

It is clear that modifications can be made to the described vehicle and hydraulic system which do not extend beyond the scope of protection defined by the claims.

Indeed, it is important to note that the construction and arrangement of the vehicle 10 and the systems and components thereof (e.g., the driveline 50, the braking system 92, the control system 96, etc.) as shown in the various exemplary embodiments is illustrative only. Additionally, any element disclosed in one embodiment may be incorporated or utilized with any other embodiment disclosed herein, as long as it is in accordance with the claims.

## Claims

1. A vehicle (10) comprising:
a frame (12);
a driveline (50) coupled to the frame (12);
a hydraulic system (100) coupled to the frame (12) and configured to facilitate operation of the vehicle (10), the hydraulic system (100) comprising:
a first hydraulic outlet (200);
a second hydraulic outlet (300);
a third hydraulic outlet (400);
a first pump (104) configured to produce a first flow of a hydraulic fluid;
a second pump (120) configured to produce a second flow of
the hydraulic fluid;
a priority valve (106) comprising:
a priority inlet (108) fluidly coupled to the first pump (104);
a primary outlet (112) fluidly coupled to the first
hydraulic outlet (200); and
a secondary outlet (114) fluidly coupled to the second hydraulic outlet (300);
said hydraulic system (100) is **characterized in that** it further comprises:
a summation valve (130) comprising:
a summation inlet (132) fluidly coupled to the second pump (120);
a return outlet (138) fluidly coupled to the priority inlet (108) of the priority valve (106);
an auxiliary outlet (140) fluidly coupled to the third
hydraulic outlet (400);
a first control input (134) fluidly coupled to the
secondary outlet (114) of the priority valve (106).

2. The vehicle (10) of claim 1, wherein the first hydraulic outlet (200) defines a first predetermined minimum flow rate and the second hydraulic outlet (300) defines a second predetermined minimum flow rate and a predetermined minimum pressure.

3. The vehicle (10) of claim 2 wherein the priority valve (106) is configured to direct the first predetermined minimum flow rate through the primary outlet (112) and direct an excess flow through the secondary outlet (114).

4. The vehicle of claim 3, wherein the hydraulic system includes a relief valve (160) fluidly coupled to the secondary outlet (114) of the priority valve (106).

5. The vehicle of claim 4, wherein the relief valve (160) is configured to allow a flow from the secondary outlet (114) to a reservoir (101) when a first pressure at the relief valve (160) is greater than the predetermined minimum pressure.

6. The vehicle (10) of any one of claims 3 to 5 wherein the summation valve (130) includes a spring (142) with a preset spring force coupled to the first control input (134) and configured to direct a return flow through the return outlet (138) and an auxiliary flow through the auxiliary outlet (140).

7. The vehicle (10) of claim 6, wherein the first control input (134) applies a first control input force on the spring (142) representative of a second pressure of the excess flow in a first direction opposite the preset spring force.

8. The vehicle (10) of claim 7, wherein the preset spring force is equal to the first control input force when the second pressure of the excess flow is equal to the predetermined minimum pressure.

9. The vehicle (10) of claim 8, wherein the spring (142) is configured to increase the return flow through the return outlet (138) when the first control input force is less than the preset spring force.

10. The vehicle (10) of claim 9, wherein the spring (142) is configured to decrease the return flow when the first control input force is greater than the preset spring force.

11. The vehicle (10) of claim 8, wherein the hydraulic system (100) further comprises an orifice (150) fluidly coupled to the secondary outlet (114) of the priority valve (106) and positioned in parallel with the second hydraulic outlet (300).

12. The vehicle (10) of claim 11, wherein the summation valve (130) further includes a second control input (136) fluidly coupled to the secondary outlet (114) of the priority valve (106) and coupled to the spring configured to apply a second control input force on the spring (142) in a same direction as the preset spring force.

13. The vehicle (10) of claim 12, wherein the second control input force is representative of an orifice pressure at an outlet of the orifice (150).

14. The vehicle (10) of claim 13, wherein the spring (142) is configured to decrease the return flow when a difference between the first control input force and the second control input force is greater than the preset spring force.

15. The vehicle (10) of claim 14, wherein the spring (142) is configured to increase the return flow when the difference between the first control input force and the second control input force is less than the preset spring force.

## Patentansprüche

1. Ein Fahrzeug (10), umfassend:
einen Rahmen (12);
einen Antriebsstrang (50), der an den Rahmen (12) gekoppelt ist;
ein Hydrauliksystem (100), das an den Rahmen (12) gekoppelt ist und dazu konfiguriert ist, den Betrieb des Fahrzeugs (10) zu erleichtern, wobei das Hydrauliksystem (100) umfasst:
einen ersten hydraulischen Auslass (200);
einen zweiten hydraulischen Auslass (300);
einen dritten hydraulischen Auslass (400);
eine erste Pumpe (104), die dazu konfiguriert ist, einen ersten Strom einer Hydraulikflüssigkeit zu erzeugen;
eine zweite Pumpe (120), die dazu konfiguriert ist, einen zweiten Strom der Hydraulikflüssigkeit zu erzeugen;
ein Prioritätsventil (106), umfassend:
einen Prioritätseinlass (108), der strömungsmäßig an die erste Pumpe (104) gekoppelt ist;
einen primären Auslass (112), der strömungsmäßig an den ersten hydraulischen Auslass (200) gekoppelt ist; und
einen sekundären Auslass (114), der strömungsmäßig an den zweiten hydraulischen Auslass (300) gekoppelt ist;
das hydraulische System (100) ist **dadurch gekennzeichnet, dass** es ferner umfasst:
ein Summierventil (130), umfassend:
einen Summationseinlass (132), der strömungsmäßig an die zweite Pumpe (120) gekoppelt ist;
einen Rücklaufauslass (138), der strömungsmäßig an den Prioritätseinlass (108) des Prioritätsventils (106) gekoppelt ist;
einen Hilfsauslass (140), der strömungsmäßig an den dritten hydraulischen Auslass (400) gekoppelt ist;
einen ersten Steuereingang (134), der strömungsmäßig an den sekundären Auslass (114) des Prioritätsventils (106) gekoppelt ist.

2. Fahrzeug (10) nach Anspruch 1, wobei der erste hydraulische Auslass (200) eine erste vorbestimmte minimale Strömungsgeschwindigkeit definiert und der zweite hydraulische Auslass (300) eine zweite vorbestimmte minimale Strömungsgeschwindigkeit und einen vorbestimmten minimalen Druck definiert.

3. Fahrzeug (10) nach Anspruch 2, wobei das Prioritätsventil (106) konfiguriert ist, die erste vorbestimmte minimale Strömungsgeschwindigkeit durch den primären Auslass (112) zu leiten und eine überschüssige Strömung durch den sekundären Auslass (114) zu leiten.

4. Fahrzeug nach Anspruch 3, wobei das Hydrauliksystem ein Entlastungsventil (160) einschließt, das strömungsmäßig an den sekundären Auslass (114) des Prioritätsventils (106) gekoppelt ist.

5. Fahrzeug nach Anspruch 4, wobei das Entlastungsventil (160) dazu konfiguriert ist, einen Strom von dem sekundären Auslass (114) zu einem Reservoir (101) zu ermöglichen, wenn ein erster Druck an dem Entlastungsventil (160) größer als der vorbestimmte Mindestdruck ist.

6. Fahrzeug (10) nach einem der Ansprüche 3 bis 5, wobei das Summierventil (130) eine Feder (142) mit einer voreingestellten Federkraft einschließt, die an den ersten Steuereingang (134) gekoppelt ist und konfiguriert ist, um einen Rückfluss durch den Rückstromauslass (138) und einen Hilfsstrom durch den Hilfsauslass (140) zu leiten.

7. Fahrzeug (10) nach Anspruch 6, wobei der erste Steuereingang (134) eine erste Steuereingangskraft auf die Feder (142) ausübt, die repräsentativ für einen zweiten Druck des Überschussstroms in einer ersten Richtung entgegengesetzt zur voreingestellten Federkraft ist.

8. Fahrzeug (10) nach Anspruch 7, wobei die voreingestellte Federkraft gleich der ersten Steuereingangskraft ist, wenn der zweite Druck des Überschussstroms gleich dem vorbestimmten Mindestdruck ist.

9. Fahrzeug (10) nach Anspruch 8, wobei die Feder (142) konfiguriert ist, den Rückstrom durch den Rückstromauslass (138) zu erhöhen, wenn die erste Steuereingangskraft geringer ist als die voreingestellte Federkraft.

10. Fahrzeug (10) nach Anspruch 9, wobei die Feder (142) konfiguriert ist, den Rückstrom zu verringern, wenn die erste Steuereingangskraft größer als die voreingestellte Federkraft ist.

11. Fahrzeug (10) nach Anspruch 8, wobei das Hydrauliksystem (100) ferner eine Öffnung (150) umfasst, die strömungsmäßig an den sekundären Auslass (114) des Prioritätsventils (106) gekoppelt ist und parallel zu dem zweiten hydraulischen Auslass (300) positioniert ist.

12. Fahrzeug (10) nach Anspruch 11, wobei das Summierventil (130) ferner einen zweiten Steuereingang (136) einschließt, der strömungsmäßig an den sekundären Auslass (114) des Prioritätsventils (106) gekoppelt ist und an die Feder gekoppelt ist, die konfiguriert ist, eine zweite Steuereingangskraft auf die Feder (142) in derselben Richtung wie die voreingestellte Federkraft anzuwenden.

13. Fahrzeug (10) nach Anspruch 12, wobei die zweite Steuereingangskraft repräsentativ für einen Öffnungsdruck an einem Auslass der Öffnung (150) ist.

14. Fahrzeug (10) nach Anspruch 13, wobei die Feder (142) konfiguriert ist, den Rückstrom zu verringern, wenn eine Differenz zwischen der ersten Steuereingangskraft und der zweiten Steuereingangskraft größer ist als die voreingestellte Federkraft.

15. Fahrzeug (10) nach Anspruch 14, wobei die Feder (142) konfiguriert ist, den Rückstrom zu erhöhen, wenn die Differenz zwischen der ersten Steuereingangskraft und der zweiten Steuereingangskraft geringer ist als die voreingestellte Federkraft.

## Revendications

1. Véhicule (10) comprenant :
un châssis (12) ;
une chaîne cinématique (50) accouplée au châssis (12) ;
un système hydraulique (100) accouplé au châssis (12) et conçu pour faciliter le fonctionnement du véhicule (10), le système hydraulique (100) comprenant :
une première sortie hydraulique (200) ;
une deuxième sortie hydraulique (300) ;
une troisième sortie hydraulique (400) ;
une première pompe (104) conçue pour produire un premier écoulement d'un fluide hydraulique ;
une seconde pompe (120) conçue pour produire un second écoulement du
fluide hydraulique ;
une vanne prioritaire (106) comprenant :
une entrée prioritaire (108) accouplée fluidiquement à la première pompe (104) ;
une sortie primaire (112) accouplée fluidiquement à la première sortie
hydraulique (200) ; et
une sortie secondaire (114) accouplée fluidiquement à la deuxième sortie hydraulique (300) ;
ledit système hydraulique (100) est **caractérisé en ce qu'il** comprend en outre :
une vanne de sommation (130) comprenant :
une entrée de sommation (132) accouplée fluidiquement à la seconde pompe (120) ;
une sortie de retour (138) accouplée fluidiquement à l'entrée prioritaire (108) de la vanne prioritaire (106) ;
une sortie auxiliaire (140) accouplée fluidiquement à la troisième sortie
hydraulique (400) ;
une première entrée de commande (134) accouplée fluidiquement à la sortie
secondaire (114) de la vanne prioritaire (106).

2. Véhicule (10) selon la revendication 1, dans lequel la première sortie hydraulique (200) définit un premier débit minimal prédéterminé et la deuxième sortie hydraulique (300) définit un second débit minimal prédéterminé et une pression minimale prédéterminée.

3. Véhicule (10) selon la revendication 2, dans lequel la vanne prioritaire (106) est conçue pour diriger le premier débit minimal prédéterminé à travers la sortie primaire (112) et diriger un écoulement excédentaire à travers la sortie secondaire (114).

4. Véhicule selon la revendication 3, dans lequel le système hydraulique comporte une soupape de décharge (160) accouplée fluidiquement à la sortie secondaire (114) de la vanne prioritaire (106).

5. Véhicule selon la revendication 4, dans lequel la soupape de décharge (160) est conçue pour permettre un écoulement de la sortie secondaire (114) vers un réservoir (101) lorsqu'une première pression au niveau de la vanne de décharge (160) est supérieure à la pression minimale prédéterminée.

6. Véhicule (10) selon l'une quelconque des revendications 3 à 5, dans lequel la vanne de sommation (130) comporte un ressort (142) avec une force de ressort pré-réglée accouplé à la première entrée de commande (134) et conçu pour diriger un écoulement de retour à travers la sortie de retour (138) et un écoulement auxiliaire à travers la sortie auxiliaire (140).

7. Véhicule (10) selon la revendication 6, dans lequel la première entrée de commande (134) applique une première force d'entrée de commande sur le ressort (142) représentative d'une seconde pression de l'écoulement excédentaire dans une première direction opposée à la force de ressort pré-réglée.

8. Véhicule (10) selon la revendication 7, dans lequel la force de ressort pré-réglée est égale à la première force d'entrée de commande lorsque la seconde pression de l'écoulement excédentaire est égale à la pression minimale prédéterminée.

9. Véhicule (10) selon la revendication 8, dans lequel le ressort (142) est conçu pour augmenter l'écoulement de retour à travers la sortie de retour (138) lorsque la première force d'entrée de commande est inférieure à la force de ressort pré-réglée.

10. Véhicule (10) selon la revendication 9, dans lequel le ressort (142) est conçu pour diminuer l'écoulement de retour lorsque la première force d'entrée de commande est supérieure à la force de ressort pré-réglée.

11. Véhicule (10) selon la revendication 8, dans lequel le système hydraulique (100) comprend en outre un orifice (150) accouplé fluidiquement à la sortie secondaire (114) de la vanne prioritaire (106) et positionné en parallèle avec la deuxième sortie hydraulique (300).

12. Véhicule (10) selon la revendication 11, dans lequel la vanne de sommation (130) comporte en outre une seconde entrée de commande (136) accouplée fluidiquement à la sortie secondaire (114) de la vanne prioritaire (106) et accouplée au ressort, conçue pour appliquer une seconde force d'entrée de commande sur le ressort (142) dans une même direction que la force de ressort pré-réglée.

13. Véhicule (10) selon la revendication 12, dans lequel la seconde force d'entrée de commande est représentative d'une pression d'orifice à une sortie de l'orifice (150).

14. Véhicule (10) selon la revendication 13, dans lequel le ressort (142) est conçu pour diminuer l'écoulement de retour lorsqu'une différence entre la première force d'entrée de commande et la seconde force d'entrée de commande est supérieure à la force de ressort pré-réglée.

15. Véhicule (10) selon la revendication 14, dans lequel le ressort (142) est conçu pour augmenter l'écoulement de retour lorsque la différence entre la première force d'entrée de commande et la seconde force d'entrée de commande est inférieure à la force de ressort pré-réglée.
